# EUROPEAN PATENT SPECIFICATION

(11) **EP 1 691 957 B1**
(45) Date of publication and mention of the grant of the patent: **04.05.2011**
(21) Application number: 04768916.1
(22) Date of filing: 15.10.2004
(51) Int. Cl.: B26D 3/16, B23D 23/00

(54) **COVERING CUTTER**
SCHNEIDVORRICHTUNG FÜR ABDECKUNGEN
MACHINE DE COUPE DE COUVRE-FENETRE

(30) Priority: 16.10.2003 GB 0324252
(43) Date of publication of application: 23.08.2006
(73) Proprietor: Newell Limited, Tamworth, Staffordshire B79 7TW (GB)
(72) Inventor: GIBSON, Simon John, Leicestershire LE65 2SX (GB)
(74) Representative: Wilson, Alan Stuart
(86) International application number: PCT/GB2004/004386
(87) International publication number: WO 2005/037500

(56) References cited:
- US-A- 2 789 639
- US-A- 3 299 754
- US-A- 6 089 134
- US-A1- 2002 148 338
- US-A1- 2003 066 403
- US-A1- 2003 140 756
- US-A1- 2004 065 182

## Description

The present invention relates to cutters for coverings, particularly but not exclusively for cutting coverings such as window blinds.

Currently due to the various shapes and materials of coverings that are available, window covering cutters have a number of cutting dies for each type of covering. These cutting dies are required to be aligned with a cutting surface prior to operation of a cutting action.

Roller blind cutters use a mechanism whereby a rotatable circular blade is used for cutting. Such a roller blind cutter is disclosed in US 2003/140756 A1.

According to the invention, there is provided a roller blind cutter for cutting a roller blind comprising a tube having a longitudinal axis and a covering material wrapped around the tube, the roller blind cutter comprising a base having mounted thereon support means for supporting the roller blind in a cutting position, a mounting plate being mounted to the base moveably in a direction perpendicular to the longitudinal axis of the tube in the cutting position, a first cutting surface being mounted on a first face of the mounting plate, a second cutting surface being mounted on seconde opposite face of the mounting prate, the first and second cutting surfaces thereby being spaced in the direction of the longitudinal axis, the mounting plate having an aperture, the cutting surfaces being mounted in facing relationship on opposite sides of the aperture such that a roller blind in the cutting position is received within the aperture and movement of the mounting plate in a first direction causes the first cutting surface to cut the blind at a first position along its length and movement of the mounting plate in a second, reverse direction being limited by limiting means for limiting the extent of movement in the second direction such that the second cutting surface cuts the covering material at a second position along the length of the blind and is prevented from cutting the tube.

The support means may comprise driven support means for rotating the blind about its longitudinal axis in use. The support means may comprise clamp means for securely retaining the blind in the cutting position.

The mounting plate may be pivotally mounted on the base.

The first cutting surface may comprise a perimeter surface of a first cutting wheel which may be freely rotatable mounted,

The second surface may comprise a perimeter surface of a second cutting wheel which may be fixedly mounted.

Indexing means may be provided for rotating the fixedly mounted cutting wheel through a predetermined angle after each cut. The predetermined angle may be any angle as desired but is conveniently less than 40°, and preferably is 20°. The indexing means may comprise an indexing gear, having notches, mounted on the base, in communication with an indexing arm mounted on the mounting plate.

The first and second cutting surfaces may be typically spaced by upto 20mm. In a preferred embodiment they are spaced by about 4mm.

Measuring means may be provided to enable the blind to be cut to a desired length. The measuring means may comprise a measuring scale extending in the direction of the longitudinal axis of the bind. The measuring scale may comprise the measuring scale of the first aspect of the invention.

According to an aspect of the invention there is provided a window covering cutter and a roller blind cutter according to the invention mounted on a common surface having a common measuring scale for cutting a window covering or a roller blind to a desired length.

An embodiment of the present invention will now be described, by way of example only, with reference to the accompanying drawings, in which:
Figure 1 shows a cutting machine according to the invention;
Figure 2 shows a carriage plate of a covering cutter of the machine of Figure 1;
Figure 3 shows a die plate of a covering cutter of the machine of Figure 1;
Figure 4 shows a roller blind cutter of the machine of Figure 1; and
Figure 5 shows measuring means of the machine of Figure 1.

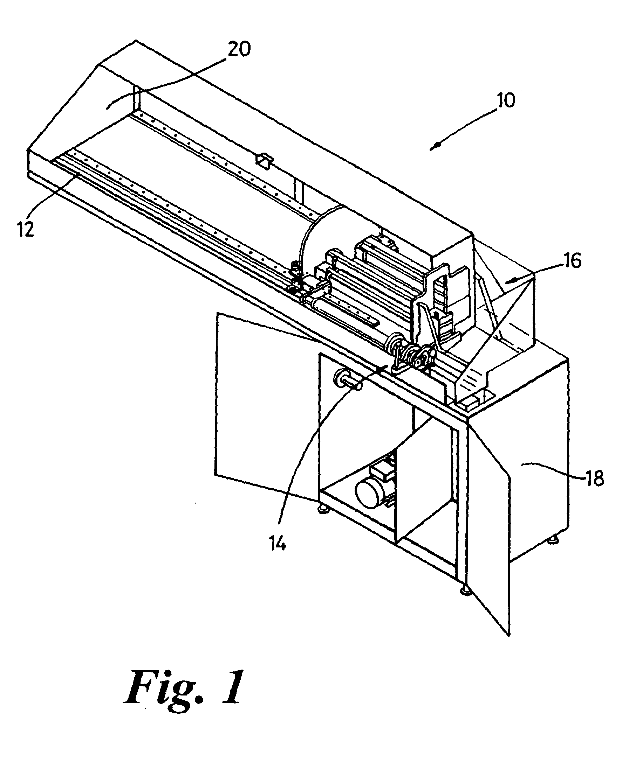

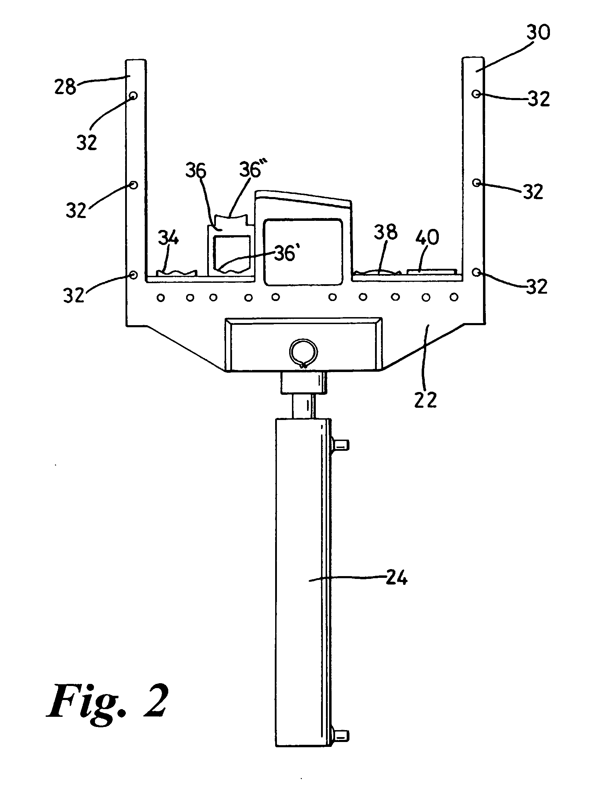

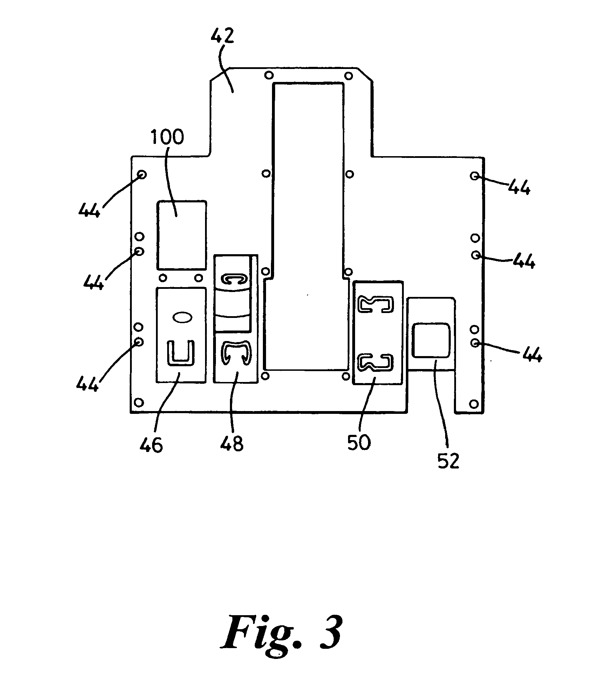

Referring to Figure 1, a blind cutting machine 10 suitable for cutting roller blinds, pleated blinds, headrails, metal blinds and roller lath/vertical blinds is shown. The machine 10 has a worktop 12, a roller blind cutter 14 at a first end of the worktop 12 and a window covering cutter 16 at the same end of the worktop 12. A cabinet 18 is provided beneath the worktop 12 at its first end to house mechanisms such as motors and a hydraulic unit which drive the roller blind cutter 14 and the window covering cutter 16. The worktop 12 is provided with a cover 20 to cover the roller blind cutter 14, window covering cutter 16 and any blinds being cut for safety reasons. Referring to Figures 2 and 3, the window covering cutter 16 comprises a carriage plate 22 having various cutting members attached to it - the form of these cutting members will be described in more detail below.

The carriage plate 22 is attached to a hydraulic ram 24 powered by a first electric motor 26 housed in the cabinet 18.

A front carriage guide 28 and a rear carriage guide 30 are provided to guide vertical movement of the carriage plate 22. Bolt holes 32 are formed in the carriage guides 28, 30. The various cutting surfaces are fixed to the carriage plate 22 and from its front side to its rear side, the carriage plate 22 comprises a vertical headrail blade 34, a corded metal shear blade 36, a pleated and corded shear blade 38 and a razor 40. Referring to Figure 2, the corded metal shear blade 36 has two cutting surfaces 36', 36" since it is required to have different cutting properties for different components of the covering to be cut.

Referring to Figure 3, the window covering cutter 16 further comprises a die plate 42 having on one surface various cutting dies corresponding to the type of window covering to be cut. The cutting dies are removeably mounted via simple bolt arrangements and can conveniently be replaced by alternative cutting dies as required. Corresponding bolt holes are provided in the cutting dies and the carriage plate 22. when a die is required to be replaced, its bolt is removed and the die is slideable from the carriage plate 22. Aperture 100 (Figure 3) on the die plate 42 is left vacant for a die to be added when required. Bolt holes 44 are provided along the front and rear sides of the die plate 42 and these bolt holes 44 are profiled to correspond to the bolt holes 32 of the front 28 and rear 30 carriage guides. Towards the front of the die plate 42 is provided a roller lath/vertical blind cutting die 46, adjacent which is a metal Venetian blinds cutting die 48, adjacent which is a headrail blind cutting die 50, adjacent which is a pleated blind cutting die closest to the rear side of the die plate 42. Each module comprises apertures suitable for receiving a different type of blind, including apertures for headrails, the blinds themselves, bottom rails and any other component features.

On an opposite surface of the die plate 42 to the cutting dies, covering support attachments are mounted to stabilise coverings being cut.

The die plate 42 is attached by means of the bolt holes 44 to the carriage guides 28, 30 such that the carriage plate 22 carries the blades 34, 36, 38, 40 across and flush with the cutting dies 46, 48, 50, and 52 in use.

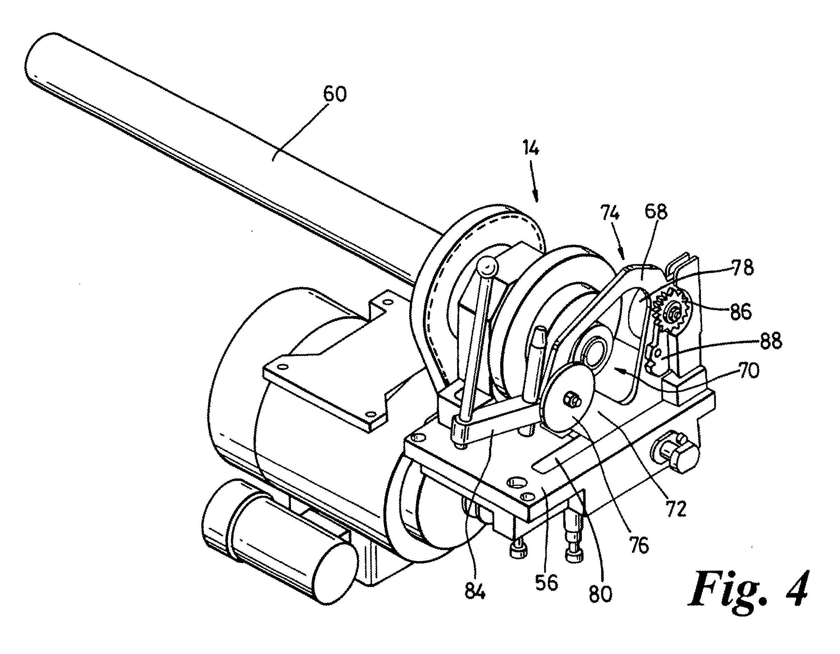

Referring to Figure 4, the roller blind cutter 14 comprises a base 56 mounted on the worktop 12 (not shown in Figure 4). Support means in the form of a clamp 58 mounted on the base 56 is provided to secure an elongate roller blind 60 in a cutting position. The clamp 58 is a standard screw type clamp. The support means is driven to rotate the blind about its longitudinal axis and a simple pulley and belt arrangement 62 is provided for this purpose - this is driven by an electric motor 64.

A mounting plate 68 is pivotally mounted to the base 56 and is pivotal in a plane perpendicular to the longitudinal axis of the roller blind 60 in the cutting position. The mounting plate 68 includes a central aperture 70 and has a thickness of about 4mm. The mounting plate 68 has a first face 72 and a second opposite face 74 which is closer to the centre of the roller blind 60 than the first face 72 when the roller blind 60 is in the cutting position.

A first cutting wheel 76 is freely rotatably mounted by a tightened screw, such that it is difficult to rotate until it contacts the driven roller blind 60 during the cutting action, towards a front side of the central aperture 70 and a second cutting wheel 78 is fixed to a rear side of the central aperture 70. The mounting plate 68 is moveable in a channel 80 formed in the base 56. Extending from the mounting plate 68 in this plane of motion is a handle 82 by which the mounting plate 68 is pivotally moveable in a first direction from the front to the rear of the machine 10 and a second opposite direction from the rear to the front of the machine 10.

Movement in the second direction is limited by a mounting part 84 of the handle coming into contact with a surface of the worktop 12 (not shown in Figure 4). An index gear 86 is associated with the second cutting wheel 78 along with an index arm 88 which serves to detect movement of the mounting plate 68 corresponding to a cutting movement which leads to rotation of the second cutting wheel 78 by 20°.

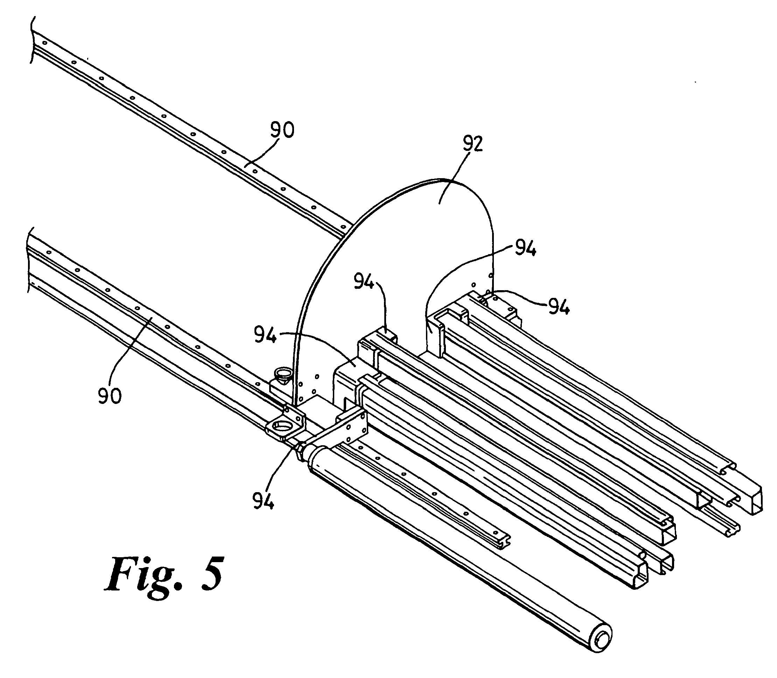

A measuring scale 90 (see Figure 5) is provided along front and rear edges of the worktop 12. The same scale 90 is used to measure the length of a roller blind to be cut by the roller blind cutter 40 and the length of any blind to be cut by the window covering cutter 16. An end plate 92 has blind support members 94 which are adapted to locate the end of a blind being cut. The cutting surfaces of both the roller blind cutter 14 and the window covering cutter 16 are not at the same point along the scale 90 but an offset is factored into the blind support members 94, which have pointers indicating the final length of the blind after cutting. The use of common measuring devices between the two cutters 14, 16 enables a significant saving in space compared to conventional machines.

In use, a blind to be cut using the window covering cutter 16 is positioned in the relevant cutting die 46, 48, 50, 52 and this may include a headrail, bottom rail, blind fabric and any other component part of the blind. A user may select and vary the length of the blind to be cut by locating the blind in the relevant support member 94 and adjusting the position of the end plate 92 on the measuring scale 90. The hydraulic ram 24 powered by the first electric motor 26 is then operated to force the carriage plate 22 vertically upwards guided by the front 28 and rear 30 carriage guides. The blind is cut in a conventional fashion by the passage of the relevant blade 34, 36, 38, 40 across apertures of the corresponding cutting die 46, 48, 50, 52.

In use, a roller blind 60 is placed in the clamp 58 of the roller blind cutter 14 following which the clamp 58 is tightened. The roller blind 60 is driven by the second electric motor 64 and the mounting plate is moved via the handle 82 in the first direction from the front of the machine 10 towards the rear of the machine 10. During this movement of the mounting plate 68, the first cutting wheel 76 cuts through the entire blind 60. This includes a blind tube 96 and a fabric covering 98 wrapped around the tube 96. The blind 60 is covered in a shrink wrap material which serves to hold the fabric 98 tightly against the blind 96 throughout the cutting process. The handle 82 is next used to bring the mounting plate 68 back in an opposite direction 90 from the rear of the machine 10 to the front of the machine 10. In this movement the second cutting wheel 78 cuts through the fabric 98 of the blind 60 but not the tube 96 since the movement of the mounting plate 68 is limited by abutment of the mounting part 84 on the worktop 12. Driven rotation of the blind ensures that the fabric 98 is cut around the entire circumference of the tube 94. The thickness of the mounting plate 68 is about 4mm and therefore the finished roller blind comprises an edge of the fabric covering 98 which is offset by about 4mm from the edge of the tube 96. Advantageously the roller blind cutter 14 provides an efficient means of producing a finished roller blind having a fabric covering edge which is inset from an edge of the tube mounting the fabric covering.

Upon completion of the movement of the mounting plate 68 in the opposite direction, the index arm 88 forces the movement of the index gear 86 by one notch on the gear 86 and this is equivalent to 20° of movement in the present embodiment. Advantageously, a different part of the second cutting wheel 78 is then used for the next roller blind to be cut. In this way an efficient means of using the entire cutting surface of the second cutting wheel 78 is provided.

It has been found beneficial to fix the second cutting wheel 78 during cutting of the fabric 98 alone since this prevents fraying of the fabric during the cutting process. When cutting both the tube 96 and the fabric 98, it has been found that free mounting of the first cutting wheel 76 provides an efficient cutting operation - therefore no indexing means is necessary in association with the first cutting wheel 76.

Beneficially the roller blind cutter 14 and the window covering cutter 16 use the same measuring scale 90. This gives rise to a significant saving in space compared to previous machines - in which roller blind cutters and other window covering cutters were not provided on the same machine.

Various modifications may be made without departing from the scope of the claims - for example a different form of mounting plate may be envisaged in use with the roller blind cutter which perhaps provides a different form of indexing means and to offset cutting surfaces - which may be moveable linearly as opposed to pivotally. Different cutting modules may be provided for cutting different types of blinds for example wooden blinds or faux wood blinds, and the form of the carriage plate used to simultaneously operate each cutting blade may be different.

## Claims

1. A roller blind cutter (14) for cutting a roller blind (60) comprising a tube having a longitudinal axis and a covering material wrapped around the tube the roller blind cutter comprising a base (56) having mounted thereon support means (58) for supporting the roller blind in a cutting position, a mounting plate (68) being mounted to the base moveably in a direction perpendicular to the longitudinal axis of the tube in the cutting position, a first cutting surface (76) being mounted on a first face (72) of the mounting plate, a second cutting surface (78) being mounted on a second opposite face (74) of the mounting plate, the first and second cutting surfaces (76, 78) thereby being spaced in the direction of the longitudinal axis, the mounting plate (68) having an aperture (70), the cutting surfaces (76, 78) being mounted in facing relationship on opposite sides of the aperture (70) such that a roller blind (60) in the cutting position is received within the aperture (70) and movement of the mounting plate (68) in a first direction causes the first cutting surface (76) to cut the blind (60) at a first position along its length **characterized in that** movement of the mounting plate (68) in a second, reverse direction is limited by limiting means (84) for limiting the extent of movement in the second direction such that the second cutting surface (78) cuts the covering material (98) at a second position along the length of the blind (60) and is prevented from cutting the tube (94).

2. A roller blind cutter according to Claim 1, in which the support means (58) comprises:
a) driven support means for rotating the blind about its longitudinal axis in use;
b) clamp means for securely retaining the blind in the cutting position; or
c) both (a) and (b).

3. A roller blind cutter according to Claims 1 or Claim 2, in which the mounting plate (68) is pivotally mounted on the base.

4. A roller blind cutter according to any of Claims 1 to 3, in which the first cutting surface comprises a perimeter surface of a first cutting wheel (76), which is optionally freely rotatably mounted.

5. A roller blind cutter according to any of Claims 1 to 4, in which the second surface comprises a perimeter surface of a second cutting wheel (78), which is optionally fixedly mounted.

6. A roller blind cutter according to any of Claims 1 to 5 further comprising indexing means for rotating the fixedly mounted cutting wheel through a predetermined angle after each cut and, optionally, the indexing means comprises an indexing gear (86), having notches, mounted on the base, in communication with an indexing arm (88) mounted on the mounting plate.

7. A roller blind cutter according to any of Claims 1 to 6, in which:
a) measuring means (90) is provided to enable the blind to be cut to a desired length;
b) the first and second cutting surfaces are typically spaced by up to 20mm: or
c) both (a) and (b).

8. A cutting machine (10) comprises a window covering cutter (16) and a roller blind cutter according to any of Claims 1 to 7 mounted on a common surface having a common measuring scale (90) for cutting a window covering or a roller blind to a desired length.

9. The cutting machine of claim 8 wherein the window covering cutter comprises a plurality of cutting modules, each module comprising a cutting die (46, 48, 50, 52) and a cutting member (34, 36, 38, 40), each cutting die having an aperture adapted to locate a window covering, each cutting member having a cutting surface moveable across the aperture to cut a covering located in the die and actuation means (24, 26) to operate movement of each cutting member such that all of the cutting members are moved across their respective apertures upon each operation of the actuation means.

10. The cutting machine of claim 9 in which the cutting modules are arranged substantially linearly, optionally substantially horizontally, in use.

11. The cutting machine of claim 9 or claim 10 in which:
a) a carriage plate is provided to mount the cutting members;
b) a die plate is provided to mount the cutting dies; or
c) both (a) and (b).

12. The cutting machine of claim 11 in which the cutting members, cutting dies or both are replaceably mounted.

13. The cutting machine of any of claims 9 to 12 in which each cutting module further comprises guide means (28, 30) for guiding movement of the cutting member relative to the die.

14. The cutting machine of any of claims 11 to 13 in which the actuation means is arranged to drive the carriage plate (22) upon which the cutting members are mounted.

15. The cutting machine of any of claims 9 to 14 in which more than one aperture is provided upon any of the cutting dies and, optionally, the or each cutting member comprises a plurality of cutting surfaces corresponding to each aperture of the die.

## Patentansprüche

1. Rollo-Schneidevorrichtung (14) zum Schneiden eines Rollos (60), das aufweist ein Rohr mit einer Längsachse und ein Abdeckungsmaterial, das um das Rohr gewickelt ist, wobei die Rollo-Schneidevorrichtung eine Basis (56), auf der Haltemittel (58) angebracht sind zum Halten des Rollos in einer Schneideposition, und eine Befestigungsplatte (68) aufweist, die zu der Basis bewegbar in eine Richtung senkrecht zu der Längsachse des Rohrs in der Schneideposition angebracht ist, wobei eine erste Schneidefläche (76) auf einer ersten Fläche (72) der Befestigungsplatte angebracht ist, eine zweite Schneidefläche (78) auf einer zweiten gegenüberliegenden Fläche (74) der Befestigungsplatte angebracht ist, wobei die ersten und zweiten Schneideflächen (76, 78) dabei in der Richtung der Längsachse beabstandet sind, wobei die Befestigungsplatte (68) eine Öffnung (70) hat, wobei die Schneideflächen (76, 78) in einer zugewandten Beziehung an gegenüberliegenden Seiten der Öffnung (70) derart angebracht sind, dass ein Rollo (60) in der Schneideposition in der Öffnung (70) aufgenommen wird und eine Bewegung der Befestigungsplatte (68) in eine erste Richtung veranlasst, dass die erste Schneidefläche (76) das Rollo (60) an einer ersten Position entlang seiner Länge schneidet, **dadurch gekennzeichnet, dass** eine Bewegung der Befestigungsplatte (68) in eine zweite entgegengesetzte Richtung begrenzt ist durch Begrenzungsmittel (84) zum Begrenzen des Umfangs einer Bewegung in die zweite Richtung derart, dass die zweite Schneidefläche (78) das Abdeckungsmaterial (98) an einer zweiten Position entlang der Länge des Rollos (60) schneidet und an einem Schneiden des Rohres (94) gehindert wird.

2. Rollo-Schneidevorrichtung gemäß Anspruch 1, wobei das Haltemittel (58) aufweist:
(a) angetriebene Haltemittel zum Rotieren des Rollos in Betrieb um seine Längsachse;
(b) Klemmmittel zum sicheren Festhalten des Rollos in der Schneideposition; oder
(c) sowohl (a) als auch (b).

3. Rollo-Schneidevorrichtung gemäß Anspruch 1 oder Anspruch 2, wobei die Befestigungsplatte (68) schwenkbar an der Basis gebracht ist.

4. Rollo-Schneidevorrichtung gemäß einem der Ansprüche 1 bis 3, wobei die erste Schneidefläche eine Umfangsoberfläche eines ersten Schneidrads (76) aufweist, das optional frei rotierbar angebracht ist.

5. Rollo-Schneidevorrichtung gemäß einem der Ansprüche 1 bis 4, wobei die zweite Fläche eine Umfangsoberfläche eines zweiten Schneidrads (78) aufweist, das optional fest angebracht ist.

6. Rollo-Schneidevorrichtung gemäß einem der Ansprüche 1 bis 5, die weiter aufweist Indexmittel zum Rotieren des fest angebrachten Schneidrads um einen vorgegebenen Winkel nach jedem Schnitt und wobei optional das Indexmittel ein Indexzahnrad mit Zähnen aufweist, das an der Basis angebracht ist, in Kommunikation mit einem Indexarm (88), der an der Befestigungsplatte angebracht ist.

7. Rollo-Schneidevorrichtung gemäß einem der Ansprüche 1 bis 6, wobei:
a) ein Messmittel (90) vorgesehen ist, um zu ermöglichen, dass das Rollo auf eine gewünschte Länge geschnitten wird;
b) die ersten und zweiten Schneideflächen typischerweise um bis zu 20mm beabstandet sind; oder
c) sowohl (a) als auch (b).

8. Schneidemaschine (10), die eine Fensterabdeckungs-Schneidevorrichtung (16) und eine Rollo-Schneidevorrichtung gemäß einem der Ansprüche 1 bis 7 aufweist, die auf einer gemeinsamen Oberfläche angebracht sind mit einer gemeinsamen Messskala (90) zum Schneiden einer Fensterabdeckung oder eines Rollos auf eine gewünschte Länge.

9. Schneidemaschine gemäß Anspruch 8, wobei die Fensterabdeckungs-Schneidevorrichtung eine Vielzahl von Schneidemodulen aufweist, wobei jedes Modul eine Schneideform (46, 48, 50, 52) und ein Schneideelement (34, 36, 38, 40) aufweist, wobei jede Schneideform eine Öffnung hat, die ausgebildet ist, eine Fensterabdeckung zu lokalisieren, wobei jedes Schneideelement eine Schneidefläche hat, die über die Öffnung bewegt werden kann, um eine Abdeckung, die sich in der Form befindet, zu schneiden, und Betätigungsmittel (24, 26), um eine Bewegung jedes Schneideelements derart zu betreiben, dass alle Schneideelemente bei jedem Betätigen des Betätigungsmittels über ihre jeweiligen Öffnungen bewegt werden.

10. Schneidemaschine gemäß Anspruch 9, wobei die Schneidemodule in Betrieb im Wesentlichen linear angeordnet sind, optional im Wesentlichen horizontal.

11. Schneidemaschine gemäß Anspruch 9 oder Anspruch 10, wobei:
a) eine Trägerplatte vorgesehen ist zum Befestigen der Schneideelemente;
b) eine Schneideform-Platte vorgesehen ist zum Befestigen der Schneideformen; oder
c) sowohl (a) als auch (b).

12. Schneidemaschine gemäß Anspruch 11, wobei die Schneideelemente, die Schneideformen oder beide auswechselbar angebracht sind.

13. Schneidemaschine gemäß einem der Ansprüche 9 bis 12, wobei jedes Schneide-Modul weiter Führungsmittel (28, 30) aufweist zum Führen einer Bewegung des Schneideelements relativ zu der Schneideform.

14. Schneidemaschine gemäß einem der Ansprüche 11 bis 13, wobei das Betätigungsmittel ausgebildet ist, die Transportplatte (22), auf der die Schneideelemente angebracht sind, anzutreiben.

15. Schneidemaschine gemäß einem der Ansprüche 9 bis 14, wobei mehr als eine Öffnung auf einer bzw. jeder der Schneideformen vorgesehen ist und optional das oder jedes Schneideelement eine Vielzahl von Schneideflächen aufweist, die jeder Öffnung der Form entsprechen.

## Revendications

1. Dispositif de coupe de store enrouleur (14) destiné à couper un store enrouleur (60) comprenant un tube ayant un axe longitudinal et un matériau d'habillage enroulé autour du tube, le dispositif de coupe de store enrouleur comprenant une base (56) comportant, montés sur elle, des moyens de support (58) destinés à supporter le store enrouleur dans une position de coupe, une plaque de montage (68) étant montée sur la base avec possibilité de déplacement dans une direction perpendiculaire à l'axe longitudinal du tube dans la position de coupe, une première surface de coupe (76) étant montée sur une première face (72) de la plaque de montage, une seconde surface de coupe (78) étant montée sur une seconde face (74), opposée, de la plaque de montage, les première et seconde surfaces de coupe (76, 78) étant ainsi espacées dans la direction de l'axe longitudinal, la plaque de montage (68) ayant une ouverture (70), les surfaces de coupe (76, 78) étant montées en se faisant face sur des côtés opposés de l'ouverture (70) de manière qu'un store enrouleur (60) dans la position de coupe soit reçu dans l'ouverture (70) et que le déplacement de la plaque de montage (68) dans une première direction amène la première surface de coupe (76) à couper le store (60) en une première position sur sa longueur, **caractérisé en ce que** le déplacement de la plaque de montage (68) dans une seconde direction, inverse, soit limité par un moyen de limitation (84) destiné à limiter l'étendue de déplacement dans la seconde direction de manière que la seconde surface de coupe (78) coupe le matériau d'habillage (98) en une seconde position sur la longueur du store (60) et ne puisse couper le tube (94).

2. Dispositif de coupe de store enrouleur selon la revendication 1, dans lequel les moyens de support (58) comprennent .
a) un moyen de support entraîné destiné à faire tourner le store autour de son axe longitudinal à l'utilisation ;
b) un moyen de serrage pour retenir de façon sûre le store dans la position de coupe ; ou
c) à la fois a) et b).

3. Dispositif de coupe de store enrouleur selon la revendication 1 ou la revendication 2, dans lequel la plaque de montage (68) est montée sur la base de manière à pivoter.

4. Dispositif de coupe de store enrouleur selon l'une quelconque des revendications 1 à 3, dans lequel la première surface de coupe comprend une surface de périmètre d'une première roue de coupe (76) qui est facultativement montée en rotation libre.

5. Dispositif de coupe de store enrouleur selon l'une quelconque des revendications 1 à 4, dans lequel la seconde surface comprend une surface de périmètre d'une seconde roue de coupe (78) qui est facultativement montée fixe.

6. Dispositif de coupe de store enrouleur selon l'une quelconque des revendications 1 à 5, comprenant, en outre, un moyen à cliquet pour faire tourner la roue de coupe montée fixement sur un angle prédéterminé après chaque coupe et, facultativement, le moyen à cliquet comprend une roue à cliquet (86), comportant des encoches, monté sur la base, en communication avec un bras à cliquet (88) monté sur la plaque de montage.

7. Dispositif de coupe de store enrouleur selon l'une quelconque des revendications 1 à 6, dans lequel :
a) un moyen de mesurage (90) est prévu pour permettre au store d'être coupé en une longueur souhaitée ;
b) les première et seconde surfaces de coupe sont habituellement espacées d'une distance allant jusqu'à 20 mm ; ou
c) à la fois a) et b).

8. Machine de coupe (10) comprenant un dispositif de coupe d'habillage de fenêtre et un dispositif de coupe de store enrouleur selon l'une quelconque des revendications 1 à 7 montés sur une surface commune ayant une échelle de mesurage commune (90) pour couper un habillage de fenêtre ou un store enrouleur en une longueur souhaitée.

9. Machine de coupe selon la revendication 8, dans laquelle le dispositif de coupe d'habillage de fenêtre comprend une pluralité de modules de coupe, chaque module comprenant une matrice de coupe (46, 48, 50, 52) et un élément de coupe (34, 36, 38, 40), chaque matrice de coupe ayant une ouverture conçue pour positionner un habillage de fenêtre, chaque élément de coupe ayant une surface de coupe mobile d'un bout à l'autre de l'ouverture pour couper un habillage positionné dans la matrice et des moyens d'actionnement (24, 26) destinés à déclencher le déplacement de chaque élément de coupe de manière que tous les éléments de coupe soient déplacés d'un bout à l'autre de leur ouverture respective lors de chaque actionnement des moyens d'actionnement.

10. Machine de coupe selon la revendication 9, dans laquelle les modules de coupe sont agencés sensiblement linéairement, facultativement sensiblement horizontalement, à l'utilisation.

11. Machine de coupe selon la revendication 9 ou la revendication 10, dans laquelle :
a) une plaque chariot est prévue pour monter les éléments de coupe ;
b) une plaque à matrices est prévue pour monter les matrices de coupe ; ou
c) à la fois a) et b).

12. Machine de coupe selon la revendication 11, dans laquelle les éléments de coupe, les matrices de coupe, ou les deux à la fois, sont montés avec possibilité de remplacement.

13. Machine de coupe selon l'une quelconque des revendications 9 à 12, dans laquelle chaque module de coupe comprend, en outre, des moyens de guidage (28, 30) destinés à guider le déplacement de l'élément de coupe par rapport à la matrice.

14. Machine de coupe selon l'une quelconque des revendications 11 à 13, dans laquelle les moyens d'actionnement sont agencés pour entraîner la plaque chariot (22) sur laquelle sont montés les éléments de coupe.

15. Machine de coupe selon l'une quelconque des revendications 9 à 14, dans laquelle plus d'une ouverture est prévue sur l'une quelconque des matrices de coupe et, facultativement, 1"élément de coupe ou chaque élément de coupe comprend une pluralité de surfaces de coupe correspondant à chaque ouverture de la matrice.
